# EUROPÄISCHE PATENTSCHRIFT

(11) **EP 3 590 272 B1**
(45) Veröffentlichungstag und Bekanntmachung des Hinweises auf die Patenterteilung: **14.07.2021**
(21) Anmeldenummer: 18708669.9
(22) Anmeldetag: 01.03.2018
(51) Int. Cl.: H04R 5/02, B60R 11/02, B60R 11/00

(54) **KOPFSTÜTZE MIT EINER TRAGSTRUKTUR FÜR LAUTSPRECHER UND SITZ MIT SOLCH EINER KOPSSTÜTZE**
HEADREST WITH A SUPPORTING STRUCTURE FOR LOUDSPEAKERS AND SEAT WITH SUCH A HEADREST
APPUI-TÊTE AVEC UNE STRUCTURE DE SUPPORT POUR HAUT-PARLEURS ET SIÈGE AVEC UN TEL APPUI-TÊTE

(30) Priorität: 01.03.2017 EP 17158778
(43) Veröffentlichungstag der Anmeldung: 08.01.2020
(73) Patentinhaber: Audio Mobil Elektronik GmbH, 5282 Braunau am Inn - Ranshofen (AT)
(72) Erfinder: STOTTAN, Thomas, 5282 Braunau am Inn (AT); HATHEIER, Thomas, 4963 St. Peter am Hart (AT); FREI, Richard, 5280 Braunau am Inn (AT)
(74) Vertreter: Jell, Friedrich
(86) Internationale Anmeldenummer: PCT/EP2018/055118
(87) Internationale Veröffentlichungsnummer: WO 2018/158406

(56) Entgegenhaltungen:
- WO-A1-93/01951
- WO-A1-2016/022238
- US-A1- 2007 230 738
- US-A1- 2013 287 246

## Beschreibung

### Technisches Gebiet

Die Erfindung betrifft eine Kopfstütze mit einer Tragstruktur und mit zumindest einem an der Tragstruktur vorgesehenen Lautsprecherkorb für einen Lautsprecher.

### Stand der Technik

Aus dem Stand der Technik (WO93/01951A1) sind Kopfstützen mit einer Tragstruktur bekannt, die eine Halterung mit Halteelementen aufweisen, um Träger an der Tragstruktur zu befestigen. Um Lautsprecher in der Kopfstütze integrieren zu können, sind in der Tragstruktur Aussparungen eingebracht, in denen Lautsprecher vorgesehen sind. Derartige Aussparungen in der Tragstruktur schwächen jedoch die Stabilität der Kopfstütze und führen zu einer verminderten Rigidität und Standfestigkeit. Zudem weisen derartige Kopfstützen einen vergleichsweise hohen Montageaufwand auf.

Ein weiteres Beispiel einer solchen Kopfstütze mit einer verhältnismäßig komplexen Tragstruktur, in welcher Lautsprecher fixiert werden, ist aus der Druckschrift WO2016/022238 A1 bekannt.

Lautsprecher mit Kunststoffkörben, welche einstückig mit Befestigungselementen ausgeformt sind, werden in den Druckschriften US2007/230738 A1 und US 2013/287246 A1 beschrieben.

### Darstellung der Erfindung

Die Erfindung hat sich daher die Aufgabe gestellt, eine Kopfstütze der eingangs geschilderten Art konstruktiv zu vereinfachen und in der Standfestigkeit zu erhöhen.

Die Erfindung löst die gestellte Aufgabe durch die Merkmale des Anspruchs 1.

Geht die Tragstruktur in den Lautsprecherkorb einstückig über und bildet diesen aus, so kann eine konstruktiv besonders einfache Kopfstütze geschaffen werden, die zudem eine hohe mechanische Stabilität bzw. Rigidität aufweisen kann und eine zuverlässige Befestigung sowohl der Lautsprecher als auch der Kopfstütze ermöglicht. So führt nämlich eine Tragstruktur, die in den Lautsprecherkorb einstückig übergeht und diesen auch ausbildet, zu einer Einteiligkeit. Damit kann sich die Möglichkeit ergeben, beispielsweise durch Spritzgießen eine besonders einfache herzustellende Tragstruktur für die Kopfstütze zu schaffen. Des Weiteren sind auch andere Fertigungsverfahren, wie etwa Tiefziehen und Laminieren möglich.
Zudem kann diese einstückige und übergehende Ausbildung die Standfestigkeit der Kopfstütze weiter erhöhen, da die Lautsprecherkörbe in der Art einer Sicke in der Tragstruktur die Biegesteifigkeit an der Kopfstütze verbessern können.
Die erfindungsgemäße Kopfstütze ist daher nicht nur konstruktiv einfach ausgeführt, sondern weist auch eine hohe mechanische Standfestigkeit auf.

Die Kopfstütze kann an einem Träger handhabungsfreundlich befestigt werden, wenn die Kopfstütze eine Halterung aufweist, die mindestens ein Halteelement zur Befestigung der Kopfstütze an einem Träger aufweist. Der Träger kann hierbei eine Tragstange, eine Sitzlehne oder auch ein Tragprofil sein und kann dabei eine zuverlässige Befestigung der Kopfstütze an einem Sitz, beispielsweise Fahrzeugsitz, ermöglichen.

Die Konstruktion der Kopfstütze kann sich zudem weiter vereinfachen, wenn der Lautsprecherkorb das Halteelement zur Befestigung des Trägers trägt. Außerdem kann damit die Zugänglichkeit der Halteelemente verbessert werden, was die Handhabung der Kopfstütze bei der Montage erleichtern kann.

Eine besonders kompakte Kopfstütze kann zudem geschaffen werden, wenn das Halteelement an die Rückseite des Lautsprecherkorbs anschließt. Außerdem bedarf es bei dieser Anordnung des Halteelements keiner Rücksichtnahme auf eventuelle seitliche Durchbrüche des Lautsprecherkorbs, um akustische Parameter in der Schallabgabe sicherstellen zu können.

Geht die Tragstruktur vom Lautsprecherkorb in das Halteelement einstückig über und bildet dieses aus, so kann der konstruktive Aufwand der Kopfstütze durch diese Einteiligkeit weiter vereinfacht werden. Durch den Verzicht auf zusätzliche Halteelemente bzw. zusätzliches Montagematerial kann zudem eine fertigungstechnisch einfache Kopfstütze, geschaffen werden. Im Allgemeinen wird weiter festgehalten, dass die Halteelemente vorteilhafterweise einstückig durch die Tragstruktur ausgebildet werden können.

Die Zuverlässigkeit der Befestigung des Trägers an der Tragstruktur kann weiter erhöht werden, wenn das Halteelement eine Schnappschelle zur Aufnahme und Befestigung des Trägers ausbildet.

Trägt der Lautsprecherkorb mehrere Halteelemente zur Befestigung des Trägers, kann dies die mechanische Verbindung in der Standfestigkeit weiter erhöhen.

Eine besonders vorteilhafte Kopfstütze kann geschaffen werden, wenn die Tragstruktur in zwei Lautsprecherkörbe einstückig übergeht und diese ausbildet, welche Lautsprecherkörbe sich an gegenüberliegenden Randbereichen der Tragstruktur befinden. Durch den insbesondere symmetrischen Aufbau der Tragstruktur können noch höhere Belastungen abgetragen werden und eine besonders standfeste Kopfstütze geschaffen werden.

Die Konstruktion der Kopfstütze kann weiter vereinfacht werden, wenn die Lautsprecherkörbe je das bzw. mindestens ein Halteelement zur Befestigung des Trägers tragen.

Die Stabilität und somit die Standfestigkeit der Kopfstütze können weiter erhöht werden, wenn die Tragstruktur mindestens eine Verstärkungsrippe aufweist, die ein drittes Halteelement zur Befestigung des Trägers ausbildet. Diese Verstärkungsrippen können bevorzugter Weise aus dem Material der Tragstruktur einstückig ausgeformt sein um eine besonders rigide Tragstruktur zu schaffen.

Ist das dritte Halteelement zwischen den beiden Halteelementen der Lautsprecherkörbe angeordnet, so kann durch das dritte Halteelement nicht nur eine zuverlässigere Befestigung des Trägers an der Tragstruktur erfolgen, sondern auch die Stabilität der Tragstruktur weiter erhöht werden, da der Träger als zusätzliches Verstärkungselement in der Tragstruktur wirken kann.

Die Erfindung kann sich besonders auszeichnen, wenn die Kopfstütze mindestens einen Träger zur Befestigung der Kopfstütze an einem Sitz, insbesondere Fahrzeugsitz, aufweist.

Verläuft der Träger bügelförmig vom ersten Lautsprecherkorb zum zweiten Lautsprecherkorb und ist er an deren Halteelementen befestigt, so kann eine besonders zuverlässige Verbindung zwischen Träger und Tragstruktur geschaffen werden.

Die erfindungsgemäße Kopfstütze kann besonders für einen Sitz, insbesondere Fahrzeugsitz, geeignet sein.

### Kurze Beschreibung der Zeichnungen

In den Figuren ist beispielsweise der Erfindungsgegenstand anhand mehrerer Ausführungsvarianten näher dargestellt. Es zeigen
Fig. 1 eine Rückansicht einer erfindungsgemäßen Kopfstütze in einer ersten Ausführungsform,
Fig. 2 eine Vorderansicht der Kopfstütze aus Fig. 1,
Fig. 3 eine Rückansicht einer erfindungsgemäßen Kopfstütze in einer zweiten Ausführungsform und
Fig. 4 eine Rückansicht einer erfindungsgemäßen Kopfstütze in einer dritten Ausführungsform.

### Wege zur Ausführung der Erfindung

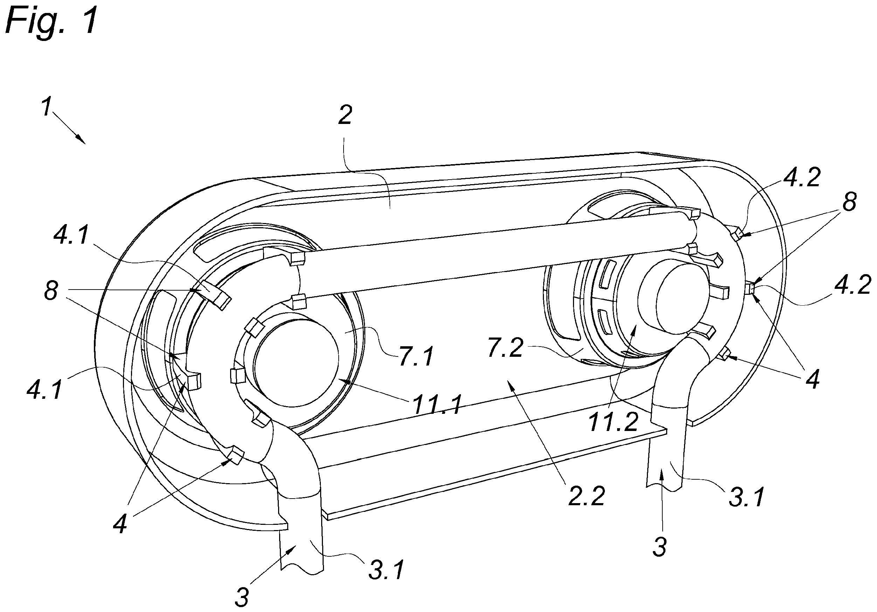

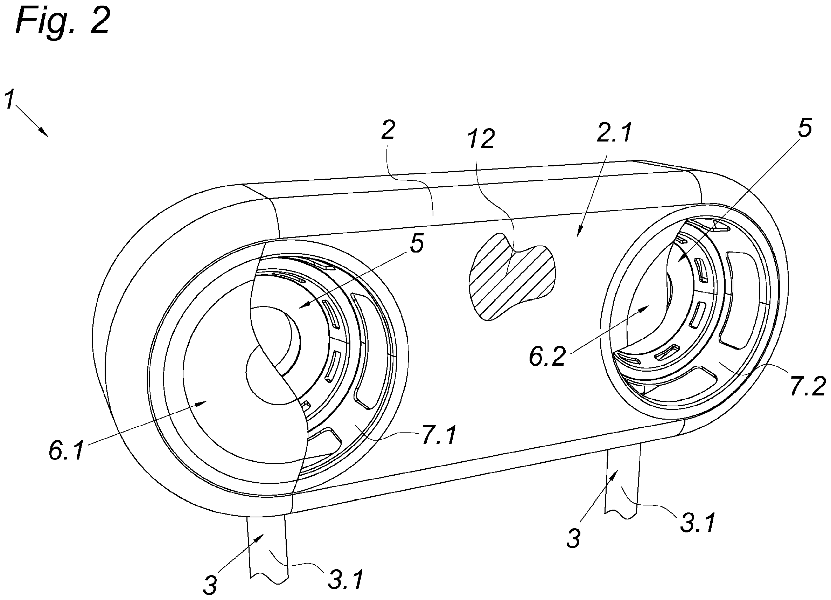

Nach Fig. 1 ist eine erfindungsgemäße Kopfstütze 1 für einen Fahrzeugsitz mit einer Tragstruktur 2 nach dem ersten Ausführungsbeispiel dargestellt. An der Tragstruktur 2 ist ein in Fig. 2 angedeutet dargestellter Stützkörper 12, beispielsweise aus Schaumstoff, zur Abstützung eines Kopfs eines im Fahrzeugsitz Sitzenden vorgesehen. Der Stützköper 12 befindet sich auf der Vorderseite 2.1 der Tragstruktur 2.

Die Kopfstütze 1 weist zudem eine Halterung 4 auf, die mindestens ein Halteelement 4.1, 4.2 aufweist und zur Aufnahme eines Trägers 3 ausgebildet ist. Der Träger 3 dient zur Befestigung der Kopfstütze 1 an einem Fahrzeugsitz. Die Halterung 4 weist dabei mehrere Halteelemente 4.1, 4.2 auf, durch die der Träger 3 mit der Tragstruktur 2 kraft- und formschlüssig verbunden ist. Wie aus den Fig. 1-3 ersichtlich, ist der Träger 3 vorzugsweise als Tragstange 3.1 ausgebildet.

Wie der Fig. 2 entnommen werden kann, weist die Tragstruktur 2 zwei Aufnahmen 5 auf, um dort Lautsprecher 6.1, 6.2 vorsehen zu können. Insbesondere sind bei den Aufnahmen 5 Lautsprecherkörbe 7.1, 7.2 zu erkennen, die damit an der Tragstruktur 2 vorgesehenen sind. In diesem Zusammenhang wird erwähnt, dass selbstverständlich die Tragstruktur nur eine Aufnahme 5 für einen Lautsprecher 6.1 bzw. 6.2 aufweisen kann - was nicht dargestellt ist.

Die Lautsprecherkörbe 7.1, 7.2 sind dabei erfindungsgemäß durch die Tragstruktur 2 ausgebildet, indem die Tragstruktur 2 in die Lautsprecherkörbe 7.1, 7.2 einstückig übergeht, wodurch Einteiligkeit erreicht und sich beispielsweise eine naht- und stoßfreie Tragstruktur 2 ergibt. Zudem können damit die Lautsprecherkörbe 7.1, 7.2 in diesem Bereich der Kopfstütze 1 gleich -wie meist ansonsten dort zu findende Rippenstrukturen- als Versteifung der Tragstruktur 2 dienen und damit als stabilitätsgebendes Element der Tragstruktur 2 wirken. Die Lautsprecherkörbe 7.1, 7.2 befinden sich auf der Rückseite 2.2 der Tragstruktur 2.

Besonders bevorzugt bildet die Tragstruktur 2 dabei zwei Lautsprecherkörbe 7.1, 7.2 aus, die sich an gegenüberliegenden Randbereichen der Tragstruktur 2 befinden. Der Träger 3 in Form einer Tragstange 3.1 erstreckt sich dabei bügelförmig vom ersten zum zweiten Lautsprecherkorb 7.1, 7.2 und ist an deren Halteelementen 4.1, 4.2 befestigt. Die Tragstruktur 2 kann auch an mehreren Tragstangen 3.1, vorzugsweise zwei, befestigt sein, was nicht näher dargestellt worden ist.

Die Lautsprecherkörbe 7.1, 7.2 sind dabei einstückig aus der Tragstruktur 2 ausgeformt, was eine besonders rigide Tragstruktur 2 schafft. Durch die in die Lautsprecherkörbe 7.1, 7.2 übergehende Tragstruktur 2 kann einerseits die Montage der Lautsprecher 6.1, 6.2 erleichtert werden und andererseits die Steifheit der Tragstruktur 2 durch die einstückig ausgeformten Lautsprecherkörbe 7.1, 7.2 als Strukturelement erhöht werden. An der Rückseite 11.1, 11.2 der Lautsprecherkörbe 7.1, 7.2 sind zudem Halteelemente 4.1, 4.2 vorgesehen, welche eine kraftschlüssige Verbindung zwischen Träger 3 und Tragstruktur 2 herstellen. Die Lautsprecher 6.1, 6.2 können hierbei etwa in der Art einer Kartusche von der Vorderseite in die jeweilige Aufnahme 5 eingesetzt und dort befestigt werden, was besonders einfache Montagebedingungen schafft.

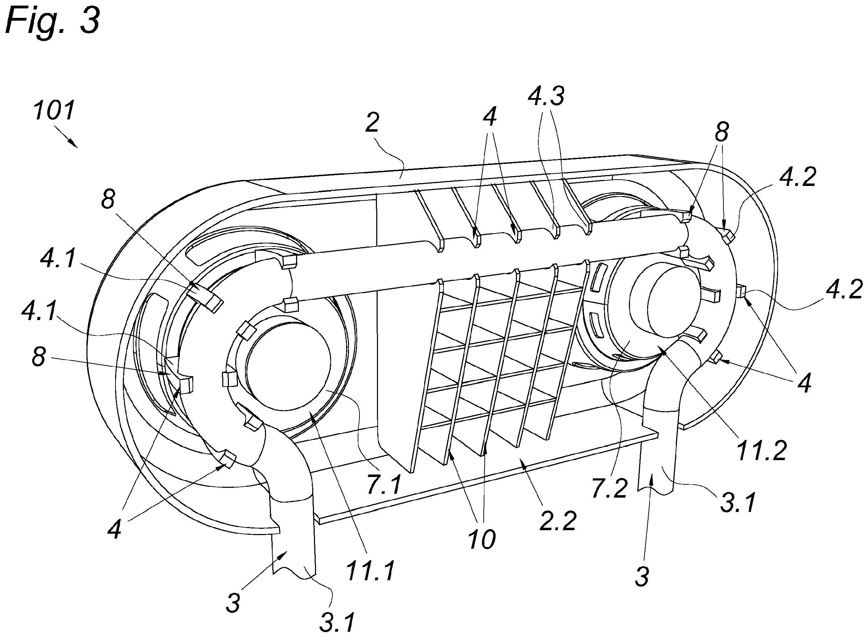

Wie in den Fig. 1 und 3 zu erkennen ist, schließen die Halteelemente 4.1, 4.2 an die Rückseite 11.1, 11.2 der Lautsprecherkörbe 7.1, 7.2 an. In einer bevorzugten Ausführungsform kann die Tragstruktur 2 in die Halteelemente 4.1, 4.2, 4.3 übergehen. Insbesondere sind dabei die Halteelemente 4.1, 4.2, 4.3 einteilig durch die Tragstruktur 2 ausgebildet. Die Halteelemente 4.1, 4.2, 4.3 werden dabei direkt bei der Fertigung gemeinsam mit der Tragstruktur 2 abgeformt um eine besonders kompakte Tragstruktur 2 zu schaffen. Es ist jedoch ebenso vorstellbar, die Halteelemente 4.1, 4.2 nachträglich an der Rückseite 11.1, 11.2 der Lautsprecherkörbe 7.1, 7.2 vorzusehen.

Wie den Fig. 1 und 3 weiter entnommen werden kann, bilden die Halteelemente 4.1, 4.2, 4.3 bevorzugt Schnappschellen 8 zur Aufnahme und Befestigung des Trägers 3 aus. Die Schnappschellen 8 besitzen dabei eine federnde und selbstverschnappende Eigenschaft, wodurch eine werkzeuglose Montage des Trägers 3 in Form der Tragstangen 3.1 an der Tragstruktur 2 erfolgen kann. Die erfindungsgemäße Kopfstütze 1 kann sich dabei durch besonders einfache Fertigungsverhältnisse auszeichnen.

Fig. 3 zeigt in einer weiteren Ausführungsform der Kopfstütze 101, dass an der Tragstruktur 2 Verstärkungsrippen 10 vorgesehen sind, wodurch sich diese Kopfstütze 101 von der Kopfstütze 1 nach Fig. 1 unterscheidet.
Die Verstärkungsrippen 10 bieten neben den ausgeformten Lautsprecherkörben 7.1, 7.2 eine zusätzliche Versteifung der Tragstruktur 2, wodurch diese hohen mechanischen Belastungen standhalten kann. Zudem sind an den Verstärkungsrippen 10 dritte Halteelemente 4.3 vorgesehen, um damit eine weitere Befestigung des Trägers 3 zu ermöglichen und auch eine Versteifung der Tragstruktur 2 zu erreichen. Die Verstärkungsrippen 10 und somit die dritten Halteelemente 4.3 sind zwischen den Halteelementen 4.1, 4.2 der Lautsprecherkörbe 7.1, 7.2 angeordnet.

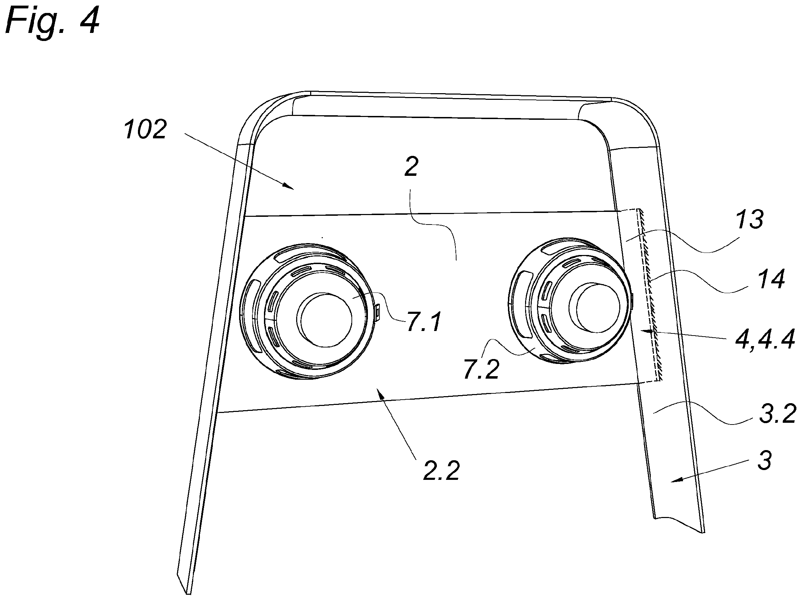

Die nach Fig. 4 dargestellte Kopfstütze 102 unterscheidet sich von den nach den Figuren 1 bis 3 dargestellten Kopfstützen 1, 101 im Wesentlichen im Bereich der Halterung 4. Die Tragstruktur 2 der Kopfstütze 102 weist nämlich Halteelemente 4.4 in Form von Laschen 13 auf. Über diese je an einer Stirnseite der Tragstruktur 2 vorgesehene Laschen 13 (in Fig. 4 ist von diesen Laschen 13 nur die rechte Lasche 13 zu erkennen) ist die Kopfstütze 102 an einen Halter 3, nämlich eine Rückenlehne 3.2, befestigt - beispielsweise über eine stoffschlüssige Verbindung, vorzugsweise Schweißverbindung 14. Es ist aber auch eine andere Verbindung, beispielsweise Schnappverbindung, Schraubverbindung, Nietverbindung etc., vorstellbar.

Wie in Fig. 4 links zwischen Tragstruktur 2 und Halter 3 in einer alternativen Ausführung beispielsweise dargestellt, kann die Tragstruktur 2 der Kopfstütze 102 auch einteilig in den Halter 3 übergehen. Laschen 13 oder andere Haltelemente sind demnach nicht notwendig. Solche eine Einteiligkeit ist beispielsweise bei einem Sitz in Schalenbauweise vorstellbar, bei dem die Kopfstütze 2 und die Rückenlehne 3.2 einteilig ausbildet sind.

Bekanntermaßen eignen sich für die Tragstruktur 2 Kunststoff, Blech, Verbundmaterialien und andere Materialen, etc.. Beispielsweise kann durch Urformen und/oder Umformen erreicht werden, dass die Tragstruktur 2 in den Lautsprecherkorb 7.1, 7.2 einstückig übergeht und diesen ausbildet, um damit Einteiligkeit zu schaffen.

## Patentansprüche

1. Kopfstütze mit einer Tragstruktur (2) und mit zumindest einem an der Tragstruktur (2) vorgesehenen Lautsprecherkorb (7.1, 7.2) für einen Lautsprecher (6.1, 6.2), **dadurch gekennzeichnet, dass** die Tragstruktur (2) in den Lautsprecherkorb (7.1, 7.2) einstückig übergeht und diesen ausbildet.

2. Kopfstütze nach Anspruch 1, **dadurch gekennzeichnet, dass** die Kopfstütze (1, 101, 102) eine Halterung (4) aufweist, die mindestens ein Halteelement (4.1, 4.2, 4.3, 4.4) zur Befestigung der Kopfstütze (1, 101, 102) an einem Träger (3), insbesondere einer Tragstange (3.1) oder einer Sitzlehne (3.2), aufweist.

3. Kopfstütze nach Anspruch 2, **dadurch gekennzeichnet, dass** der Lautsprecherkorb (7.1, 7.2) das Halteelement (4.1, 4.2) zur Befestigung des Trägers (3) trägt.

4. Kopfstütze nach Anspruch 3, **dadurch gekennzeichnet, dass** das Halteelement (4.1, 4.2) an die Rückseite (11.1, 11.2) des Lautsprecherkorbs (7.1, 7.2) anschließt.

5. Kopfstütze nach Anspruch 3 oder 4, **dadurch gekennzeichnet, dass** die Tragstruktur (2) vom Lautsprecherkorb (7.1, 7.2) in das Halteelement (4.1, 4.2) einstückig übergeht und dieses ausbildet.

6. Kopfstütze nach einem der Ansprüche 3 bis 5, **dadurch gekennzeichnet, dass** das Halteelement (4.1, 4.2) eine Schnappschelle (8) zur Aufnahme und Befestigung des Trägers (3) ausbildet.

7. Kopfstütze nach einem der Ansprüche 3 bis 6, **dadurch gekennzeichnet, dass** der Lautsprecherkorb (7.1, 7.2) mehrere Halteelemente (4.1, 4.2) zur Befestigung des Trägers (3) trägt.

8. Kopfstütze nach einem der Ansprüche 1 bis 7, **dadurch gekennzeichnet, dass** die Tragstruktur (2) in zwei Lautsprecherkörbe (7.1, 7.2) einstückig übergeht und diese ausbildet, welche Lautsprecherkörbe (7.1, 7.2) sich an gegenüberliegenden Randbereichen der Tragstruktur (2) befinden.

9. Kopfstütze nach Anspruch 8, wenn dieser von Anspruch 2 abhängt, **dadurch gekennzeichnet, dass** die zwei Lautsprecherkörbe (7.1, 7.2) jeweils ein Halteelement (4.1, 4.2) der Halterung zur Befestigung des Trägers (3) tragen.

10. Kopfstütze nach einem der Ansprüche 2 bis 9, **dadurch gekennzeichnet, dass** die Tragstruktur (2) mindestens eine Verstärkungsrippe (10) aufweist, die ein drittes Halteelement (4.3) zur Befestigung des Trägers (3) ausbildet.

11. Kopfstütze nach Anspruch 10, wenn dieser von Anspruch 9 abhängt, **dadurch gekennzeichnet, dass** das dritte Halteelement (4.3) zwischen den beiden Halteelementen (4.1, 4.2) der Lautsprecherkörbe (7.1, 7.2) angeordnet ist.

12. Kopfstütze nach einem der Ansprüche 2 bis 11, **dadurch gekennzeichnet, dass** die Kopfstütze (1, 101) den Träger (3) zur Befestigung der Kopfstütze (1, 101) an einem Sitz, insbesondere Fahrzeugsitz, aufweist.

13. Kopfstütze nach Anspruch 12 wenn dieser von Anspruch 9 abhängt, **dadurch gekennzeichnet, dass** der Träger (3) bügelförmig vom ersten Lautsprecherkorb (7.1) zum zweiten Lautsprecherkorb (7.2) verläuft und an deren Halteelementen (4.1, 4.2) befestigt ist.

14. Sitz, insbesondere Fahrzeugsitz, mit einer Kopfstütze (1, 101, 102) nach einem der Ansprüche 1 bis 13.

## Claims

1. A headrest with a support structure (2) and with at least one speaker basket (7.1, 7.2) for a speaker (6.1, 6.2) provided on the support structure (2), **characterized in that** the support structure (2) transitions integrally into the speaker basket (7.1, 7.2) and forms the latter.

2. The headrest according to claim 1, **characterized in that** the headrest (1, 101, 102) has a mount (4), which has at least one mounting element (4.1, 4.2, 4.3, 4.4) for fastening the headrest (1, 101, 102) to a support (3), more particularly a support rod (3.1) or a seat back (3.2).

3. The headrest according to claim 2, **characterized in that** the speaker basket (7.1, 7.2) supports the mounting element (4.1, 4.2) for fastening the support (3).

4. The headrest according to claim 3, **characterized in that** the mounting element (4.1, 4.2) adjoins the back side (11.1, 11.2) of the speaker basket (7.1, 7.2).

5. The headrest according to claim 3 or 4, **characterized in that** the support structure (2) transitions integrally from the speaker basket (7.1, 7.2) into the mounting element (4.1, 4.2) and forms the latter.

6. The headrest according to one of claims 3 to 5, **characterized in that** the mounting element (4.1, 4.2) forms a snap clip (8) for accommodating and fastening the support (3).

7. The headrest according to one of claims 3 to 6, **characterized in that** the speaker basket (7.1, 7.2) supports several mounting elements (4.1, 4.2) for fastening the support (3).

8. The headrest according to one of claims 1 to 7, **characterized in that** the support structure (2) transitions integrally into two speaker baskets (7.1, 7.2) and forms the latter, which speaker baskets (7.1, 7.2) are positioned in opposite edge regions of the support structure (2).

9. The headrest according to claim 8, if depending on claim 2, **characterized in that** the two speaker baskets (7.1, 7.2) each support a mounting element (4.1, 4.2) for fastening the support (3).

10. The headrest according to one of claims 1 to 9, **characterized in that** the support structure (2) has at least one reinforcing rib (10), which forms a third mounting element (4.3) for fastening the support (3).

11. The headrest according to claim 10, if depending on claim 9, **characterized in that** the third mounting element (4.3) is positioned between the two mounting elements (4.1, 4.2) of the speaker baskets (7.1, 7.2).

12. The headrest according to one of claims 2 to 11, **characterized in that** the headrest (1, 101) has the support (3) for fastening the headrest (1, 101) to a seat, more particularly a vehicle seat.

13. The headrest according to claim 12, if depending on claim 9, **characterized in that** the support (3) extends in a loop shape from the first speaker basket (7.1) to the second speaker basket (7.2) and is fastened to their mounting elements (4.1, 4.2).

14. A seat, more particularly a vehicle seat, with a headrest (1, 101, 102) according to one of claims 1 to 13.

## Revendications

1. Appuie-tête comprenant une structure de support (2) et au moins un panier de haut-parleur (7.1, 7.2), prévu sur la structure de support (2), pour un haut-parleur (6.1, 6.2), **caractérisé en ce que** la structure de support (2) passe d'un seul tenant au panier de haut-parleur (7.1, 7.2) et forme ce dernier.

2. Appuie-tête selon la revendication 1, **caractérisé en ce que** l'appuie-tête (1, 101, 102) présente un moyen de fixation (4) qui présente au moins un élément de maintien (4.1, 4.2, 4.3, 4.4) pour fixerl'appuie-tête (1, 101, 102) à un support (3), en particulier une tige de support (3.1) ou un dossier de siège (3.2).

3. Appuie-tête selon la revendication 2, **caractérisé en ce que** le panier de haut-parleur (7.1, 7.2) porte l'élément de maintien (4.1, 4.2) pour fixer le support (3).

4. Appuie-tête selon la revendication 3, **caractérisé en ce que** l'élément de maintien (4.1, 4.2) se raccorde à la face arrière (11.1, 11.2) du panier de haut-parleur (7.1, 7.2).

5. Appuie-tête selon la revendication 3 ou 4, **caractérisé en ce que** la structure de support (2) passe d'un seul tenant du panier de haut-parleur (7.1, 7.2) à l'élément de maintien (4.1, 4.2) et forme ce dernier.

6. Appuie-tête selon l'une des revendications 3 à 5, **caractérisé en ce que** l'élément de maintien (4.1, 4.2) forme un collier de serrage (8) pour recevoir et fixer le support (3).

7. Appuie-tête selon l'une des revendications 3 à 6, **caractérisé en ce que** le panier de haut-parleur (7.1, 7.2) porte plusieurs éléments de maintien (4.1, 4.2) pour fixer le support (3).

8. Appuie-tête selon l'une des revendications 1 à 7, **caractérisé en ce que** la structure de support (2) passe d'un seul tenant à deux paniers de haut-parleur (7.1, 7.2) et forme ces derniers, lesquels paniers de haut-parleur (7.1, 7.2) sont situés dans des zones de bord opposées de la structure de support (2).

9. Appuie-tête selon la revendication 8, si celle-ci dépend de la revendication 2, **caractérisé en ce que** les deux paniers de haut-parleur (7.1, 7.2) portent chacun un élément de maintien (4.1, 4.2) du moyen de fixation servant à fixer le support (3).

10. Appuie-tête selon l'une des revendications 2 à 9, **caractérisé en ce que** la structure de support (2) présente au moins une nervure de renfort (10) qui forme un troisième élément de maintien (4.3) pour la fixation du support (3).

11. Appuie-tête selon la revendication 10, si celle-ci dépend de la revendication 9, **caractérisé en ce que** le troisième élément de maintien (4.3) est disposé entre les deux éléments de maintien (4.1, 4.2) des paniers de haut-parleurs (7.1, 7.2).

12. Appuie-tête selon l'une des revendications 2 à 11, **caractérisé en ce que** l'appuie-tête (1, 101) présente le support (3) pour la fixation de l'appuie-tête (1, 101) à un siège, en particulier un siège de véhicule.

13. Appuie-tête selon la revendication 12, si celle-ci dépend de la revendication 9, **caractérisé en ce que** le support (3) s'étend en forme d'étrier du premier panier de haut-parleur (7.1) au deuxième panier de haut-parleur (7.2) et est fixé à leurs éléments de maintien (4.1, 4.2).

14. Siège, en particulier siège de véhicule, comprenant un appuie-tête (1, 101, 102) selon l'une des revendications 1 à 13.
